(19) Europäisches Patentamt
European Patent Office
Office européen des brevets

(11) **EP 2 580 104 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **11721522.8**

(22) Anmeldetag: **25.05.2011**

(51) Int Cl.:
*B62D 5/04* (2006.01)     *B62D 6/00* (2006.01)

(86) Internationale Anmeldenummer:
**PCT/EP2011/058565**

(87) Internationale Veröffentlichungsnummer:
**WO 2011/154257 (15.12.2011 Gazette 2011/50)**

(54) **BESTIMMUNG EINES MITTENGEFÜHLS FÜR EPS-LENKSYSTEME**

DETERMINATION OF A CENTER FEELING FOR EPS STEERING SYSTEMS

DÉTERMINATION D'UNE SENSATION DE POINT MILIEU POUR SYSTÈMES DE DIRECTION ASSISTÉE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2010 DE 102010029928**

(43) Veröffentlichungstag der Anmeldung:
**17.04.2013 Patentblatt 2013/16**

(73) Patentinhaber: **ZF-Lenksysteme GmbH**
**73527 Schwäbisch Gmünd (DE)**

(72) Erfinder:
• STRECKER, Jörg
  73655 Plüderhausen (DE)
• WERNER, Thomas
  73434 Aalen (DE)
• HIEGLER, Stephan
  73525 Schwäbisch Gmünd (DE)
• DIEZ RODRIGUEZ, Manuel
  73525 Schwäbisch Gmünd (DE)

(56) Entgegenhaltungen:
DE-A1-102006 044 088     DE-A1-102008 042 666
DE-A1-102008 053 424     FR-A1- 2 930 505
US-A1- 2006 086 560

**Beschreibung**

Die Erfindung betrifft ein Verfahren zur Bestimmung eines Soll-Lenkmoments für ein Lenkmittel einer Lenkvorrichtung in einem Fahrzeug.

Die Erfindung betrifft auch eine Lenkvorrichtung in einem Fahrzeug. Die Erfindung betrifft ferner ein Computerprogramm, das auf einer Steuer- und/oder Regeleinrichtung einer Lenkvorrichtung in einem Fahrzeug ablauffähig ist, sowie ein Speichermedium, auf dem das Computerprogramm abgespeichert ist.

Bei modernen Lenkvorrichtungen, beispielsweise bei einer elektrischen Servolenkung (EPS) oder einem so genannten Steer-by-Wire (SbW) Lenksystem, wird ein Soll-Lenkmoment ermittelt, das an einem Lenkmittel, beispielsweise einem Lenkrad angelegt wird, um der von dem Fahrer aufgebrachten Kraft entgegenzuwirken oder die von dem Fahrer aufgebrachte Kraft zu unterstützen. FR 2 930 505 offenbart die Merkmale des Oberbegriffs des Anspruchs 1. Häufig wird das Soll-Lenkmoment auf der Basis einer auf die Räder des Fahrzeugs tatsächlich einwirkenden Zahnstangenkraft erzeugt, um dem Fahrer eine geeignete Lenkunterstützung bereitzustellen. Zusätzlich können weitere Funktionen an der Erzeugung des Soll-Lenkmoments beteiligt sein, um für ein gewünschtes und angenehmes Lenkgefühl beim Fahrer zu sorgen. Eine qualifiziert ermittelte Zahnstangenkraft kann die tatsächlich an der Vorderachse des Fahrzeugs bzw. an der Zahnstange anliegenden Kräfte oder Kraftverhältnisse wiedergeben. Wird diese Kraft als Grundlage verwendet, um ein so genanntes Wunschlenkmoment zu erzeugen, so erhält der Fahrer in der Regel eine gute Rückmeldung über das Verhalten des Fahrzeugs bzw. über die Beschaffenheit der Fahrbahn. Zusätzlich zu dem so erzeugten Grundlenkmoment können modulartig weitere Funktionen aufgeschaltet werden, um das Wunschlenkmoment bereitzustellen.

Die Erzeugung eines Soll-Lenkmoments auf der Basis der tatsächlichen Zahnstangenkraft ist von mehreren Größen bzw. Informationen abhängig. Unter anderem bilden sich der Straßenreibwert sowie der aktuelle Fahrzustand auf die Zahnstangenkraft ab. Grundsätzlich ist ein Teil dieser Informationen hilfreich und vom Fahrer gewünscht. Ein anderer Teil wird dagegen als störend betrachtet. Vereinfachend lässt sich sagen, dass Informationen zu Größen, welche den Geradeauslauf des Fahrzeug beeinflussen, vom Fahrer ungewünscht sein können, wobei die näheren Umstände gegebenenfalls sehr differenziert behandelt werden müssen. Darüber hinaus kann es auch schwierig sein, ein vom Fahrer gewünschtes Verhalten des Soll-Lenkmoments im Mittenbereich der Lenkung bereitzustellen und zugleich einen störungsarmen Geradeauslauf des Fahrzeugs zu erreichen.

Die Aufgabe der vorliegenden Erfindung ist es, für Lenkvorrichtungen von Fahrzeugen mit einer elektrischen Servolenkung (EPS) ein verbessertes "Mittengefühl" für den Fahrer zu erzeugen. Damit soll erreicht werden, dass dem Fahrer möglichst zuverlässige und präzise Informationen über aktuelle Fahrzustände und Fahrsituationen übermittelt werden, bei gleichzeitig störungsfreiem Verhalten im Mittenbereich.

Die Aufgabe wird durch ein Verfahren der eingangs genannten Art dadurch gelöst, dass in Abhängigkeit von einer auf die Lenkvorrichtung einwirkenden tatsächlichen Zahnstangenkraft mindestens eine erste Komponente für das Soll-Lenkmoment und mindestens eine zusätzliche Komponente aus einer hierfür berechneten Zahnstangenkraft bestimmt wird. Die tatsächliche Zahnstangenkraft kann vorteilhafterweise gemessen oder beispielsweise unter Verwendung eines Beobachters oder Schätzers in bekannter Weise ermittelt werden, wobei die so ermittelte tatsächliche Zahnstangenkraft der gemessenen tatsächlichen Zahnstangenkraft weitestgehend entspricht.

Bei der Bestimmung des Soll-Lenkmoments können die einzelnen Komponenten in geeigneter Weise, beispielsweise durch Addition, zu dem Soll-Lenkmoment kombiniert werden. Unabhängig davon, dass - wie eingangs bereits beschrieben - bei der Erzeugung eines Soll-Lenkmoments noch weitere Funktionen beteiligt sein können, wird - sofern nicht anders angegeben - nachfolgend unter dem Begriff Soll-Lenkmoment stets der erfindungsgemäß berechnete Beitrag zu einem möglicherweise noch mittels der weiteren Funktionen nochmals veränderten Soll-Lenkmoment verstanden werden.

Die Aufgabe wird auch durch eine Lenkvorrichtung in einem Fahrzeug dadurch gelöst, dass die Lenkvorrichtung Mittel zur Ausführung des erfindungsgemäßen Verfahrens aufweist. Diese Mittel sind beispielsweise in Form eines in einer Steuer- und/oder Regeleinrichtung ablaufenden Computerprogramms realisiert. Die Steuer- und/oder Regeleinrichtung wird nachfolgend auch als Steuergerät bezeichnet.

Vorteilhafte Weiterbildungen der Erfindung sind in Unteransprüchen angegeben, wobei die Merkmale sowohl in Alleinstellung als auch in unterschiedlichen Kombinationen für die Erfindung wichtig sein können, ohne dass hierauf nochmals explizit hingewiesen wird.

Die Erfindung weist den Vorteil auf, dass eine Lenkvorrichtung eines Fahrzeugs ein für den Fahrer spürbares Mittengefühl erzeugt, wobei ein guter Kompromiss zwischen einer gefühlten Rückmeldung einerseits und einer Unempfindlichkeit gegenüber vom Fahrer nicht erwünschten Störeinflüssen bei Geradeausfahrt andererseits erzielt werden kann.

Daher wird erfindungsgemäß das für den Fahrer spürbare Soll-Lenkmoment um eine gegenüber vorbekannten Lösungen zusätzliche Komponente ergänzt, welche nicht aus der tatsächlichen Zahnstangenkraft, sondern aus einer berechneten Zahnstangenkraft ermittelt wird, die ihrerseits mindestens aus einem Radlenkwinkel und einer Fahrzeuggeschwindigkeit berechnet wird. Die berechnete Zahnstangenkraft wird dabei vorzugsweise so bestimmt, dass sie wenigstens näherungsweise der tatsächlichen Zahnstangenkraft entspricht.

Dadurch kann das für den Fahrer spürbare Mittengefühl deutlich verbessert werden.

Damit ergeben sich mindestens zwei Komponenten, die das Soll-Lenkmoment bestimmen: Mindestens eine erste Komponente nach vorbekannten Methoden, welche ausgehend von der tatsächlichen Zahnstangenkraft über den gesamten Winkelbereich der Lenkung einen Beitrag zum Soll-Lenkmoment liefert. Zum zweiten die zusätzliche Komponente, welche ausgehend von der berechneten Zahnstangenkraft nur im Mittenbereich der Lenkvorrichtung einen veränderlichen Beitrag liefert. Beide Komponenten können darüber hinaus auch dynamisch von der Lenkbewegung und/oder der Fahrzeugbewegung abhängig gemacht werden, insbesondere von der Fahrzeuggeschwindigkeit, welche beispielsweise als Parameter verwendet werden kann.

Eine Ausgestaltung des Verfahrens sieht vor, dass die zusätzliche Komponente nur innerhalb eines Winkelbereichs um die Geradeaus-Stellung der Lenkvorrichtung und/oder innerhalb eines Bereichs einer Querbeschleunigung veränderlich ist und darüber hinaus einen festen Wert annimmt. Dadurch kann sichergestellt werden, dass die Lenkvorrichtung außerhalb des Mittenbereichs in vorbekannter Weise reagieren kann.

Insbesondere wird vorgeschlagen, dass der Bereich der Querbeschleunigung in etwa $-1,5 \dfrac{m}{s^2}$ bis $+1,5 \dfrac{m}{s^2}$ beträgt. Damit kann als Erfahrungswert genutzt werden, dass für größere Querbeschleunigungen der die Räder lenkenden Zahnstange die Gültigkeit der zusätzlichen Komponente, welche im Wesentlichen aus dem Radlenkwinkel und der Fahrzeuggeschwindigkeit ermittelt wird, abnimmt.

Ergänzend ist vorgesehen, dass die zusätzliche Komponente nur innerhalb eines Bereichs der berechneten Zahnstangenkraft veränderlich ist und darüber hinaus einen festen Wert annimmt. Auf diese Weise kann vermieden werden, dass die zusätzliche Komponente - über ihre angedachte Funktion hinaus - einen unbeabsichtigten und unerwünschten Einfluss auf das Soll-Lenkmoment hat.

Das Verfahren lässt sich besser an Erfordernisse anpassen, wenn die berechnete Zahnstangenkraft mittels eines Modells aus dem Radlenkwinkel und der Fahrzeuggeschwindigkeit berechnet wird. Dadurch wird die Möglichkeit geschaffen, Eingangsgrößen, welche den Radlenkwinkel und die Fahrzeuggeschwindigkeit charakterisieren, einzeln zu wichten oder durch mathematische Funktionen - beispielsweise Nichtlinearitäten - an jeweilige Erfordernisse anzupassen.

Weiterhin wird vorgeschlagen, dass das Modell bauartbedingte Größen des Fahrzeugs und/oder betriebsbedingte Größen des Fahrzeugs zusätzlich berücksichtigt. Damit können diese Größen - innerhalb des oben beschriebenen Gültigkeitsbereichs der zusätzlichen Komponente - ergänzend verwendet werden, um die zusätzliche Komponente mittels einer mathematischen Operation zu beeinflussen.

Weitere Merkmale, Anwendungsmöglichkeiten und Vorteile der Erfindung ergeben sich aus der nachfolgenden Beschreibung von Ausführungsbeispielen der Erfindung, die anhand der Zeichnungen erläutert werden, wobei die Merkmale sowohl in Alleinstellung als auch in unterschiedlichen Kombinationen für die Erfindung wichtig sein können, ohne dass hierauf nochmals explizit hingewiesen wird. Die Zeichnungen zeigen:

Figur 1 eine Lenkvorrichtung mit einer Steuer- und/oder Regeleinrichtung zur Durchführung des erfindungsgemäßen Verfahrens; und

Figur 2 ein Diagramm mit einem Basismoment, einem Anteil für ein Mittengefühl und einem Soll-Lenkmoment.

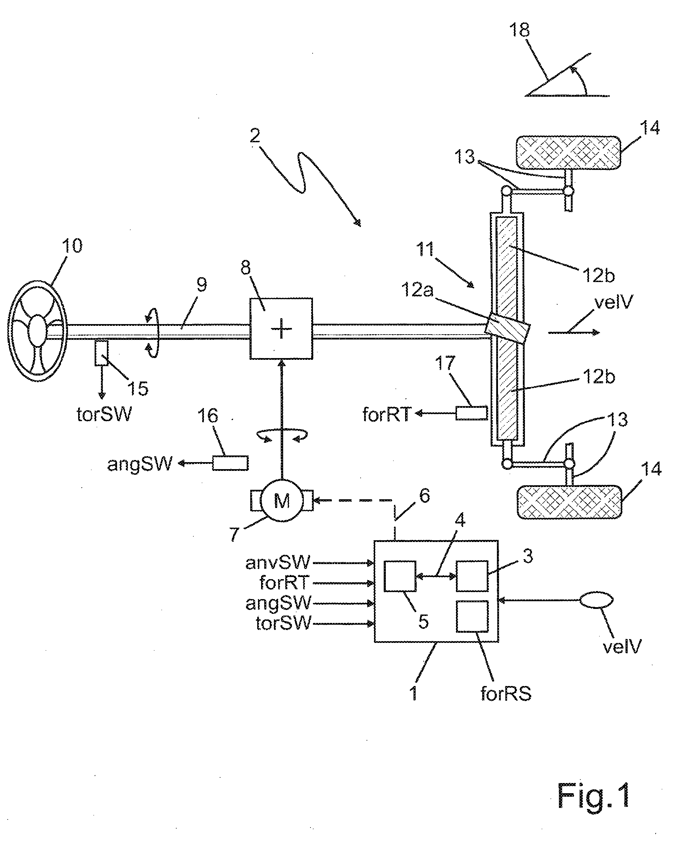

In Figur 1 ist eine nachfolgend als Steuergerät 1 bezeichnete Steuer- und/oder Regeleinrichtung dargestellt, das einer Lenkvorrichtung 2 zugeordnet ist. In dem Steuergerät 1 ist ein Mikroprozessor 3 angeordnet, der über eine Datenleitung 4, beispielsweise ein Bussystem, mit einem Speichermedium 5 verbunden ist. Über eine Signalleitung 6 ist das Steuergerät 1 mit einem Motor 7, beispielsweise einem Elektromotor, verbunden, wodurch eine Leistungssteuerung des Motors 7 durch das Steuergerät 1 ermöglicht wird. Der Motor 7 wirkt über ein Getriebe 8 auf einen Drehstab 9. An dem Drehstab 9 ist ein Lenkmittel 10, welches vorliegend als ein Lenkrad ausgebildet ist, angeordnet, mittels dessen ein Drehmoment auf den Drehstab 9 durch Betätigen des Lenkmittels 10 durch einen Fahrer aufbringbar ist.

Die Lenkvorrichtung 2 weist ferner ein Lenkgetriebe 11 auf, das beispielsweise als Zahnstangenlenkgetriebe ausgebildet ist. Das Lenkgetriebe 11 kann ferner als Kugelmuttergetriebe beziehungsweise Kugelumlaufgetriebe ausgebildet sein. In der folgenden Beschreibung wird - soweit erforderlich - überwiegend von einer Zahnstangenlenkung ausgegangen, bei der das Lenkgetriebe 11 ein Ritzel 12a und eine Zahnstange 12b umfasst. Das Lenkgetriebe 11 ist beispielsweise über das Ritzel 12a und die Zahnstange 12b sowie ein Lenkgestänge 13 mit den Rädern 14 verbunden. Die Räder 14 können in Bezug auf eine - der Geradeausfahrt des Fahrzeugs entsprechenden - Mittenstellung einen Radlenkwinkel 18 aufweisen. Ferner ist in die Zeichnung der Figur 1 eine Fahrzeuggeschwindigkeit velV eingetragen.

Die Lenkvorrichtung 2 weist ferner einen Momentensensor 15 zur Erfassung eines Ist-Lenkmoments torSW und einen Sensor 16 zur Erfassung eines Lenkradwinkels angSW auf. In dem in Figur 1 dargestellten Ausführungsbeispiel ist der Sensor 16 dem Motor 7 zugeordnet, so dass mittels des Sensors 16 ein Rotorwinkel des Motors 7 erfasst wird. Dieser entspricht dem Lenkradwinkel angSW (möglicherweise bis auf einen Faktor, der eine Übersetzung beschreibt), da der Motor 7 über das Getriebe 8 mit dem Drehstab 9 und damit dem Lenkmittel 10 zusammenwirkt. Der Lenkradwinkel angSW kann auch mittels eines dem Lenkmittel 10 beziehungsweise dem Drehstab 9 zugeordneten Sensors erfasst werden. Jedoch ist mittels des an dem Motor 7 angeordneten Sensors 16 durch die Erfassung des Rotorwinkels eine höhere Auflösung erreichbar.

Gemäß einer möglichen Ausführungsform weist die Lenkvorrichtung 2 einen Sensor 17 auf, mittels dessen eine tatsächliche Zahnstangenkraft forRT ermittelbar ist. Gemäß anderen möglichen Ausführungsformen wird die Zahnstangenkraft forRT mit anderen bekannten Verfahren, beispielsweise mittels eines Beobachters bzw. Schätzers bestimmt. Die Zahnstangenkraft forRT wird an das Steuergerät 1 übermittelt.

Erfindungsgemäß wird ergänzend zu der auf die Räder 14 einwirkenden tatsächlichen Zahnstangenkraft forRT eine berechnete Zahnstangenkraft forRS verwendet. Die Berechnung der Zahnstangenkraft for RS wird vorzugsweise ebenfalls mittels des Steuergeräts 1 durchgeführt.

Das mittels des Momentensensors 15 erfasste Ist-Lenkmoment torSW und der mittels des Sensors 16 erfasste Lenkradwinkel angSW werden ebenfalls an das Steuergerät 1 übermittelt. Ferner wird die aktuelle Fahrzeuggeschwindigkeit velV an das Steuergerät 1 übermittelt beziehungsweise dort aus anderen Größen errechnet. Dem Steuergerät 1 wird ferner eine Lenkgeschwindigkeit anvSW zugeführt. Die Lenkgeschwindigkeit anvSW bezeichnet die Umdrehungsgeschwindigkeit, mit der das Lenkmittel 10 und damit der Drehstab 9 betätigt werden. Die Lenkgeschwindigkeit anvSW kann mittels eines geeigneten Sensors beispielsweise an dem Drehstab 9 abgenommen werden. Es ist ebenso möglich, dass die Lenkgeschwindigkeit anvSW in dem Steuergerät 1 beispielsweise in Abhängigkeit von dem bereits vorliegenden Lenkradwinkel angSW und der Zeit gebildet wird.

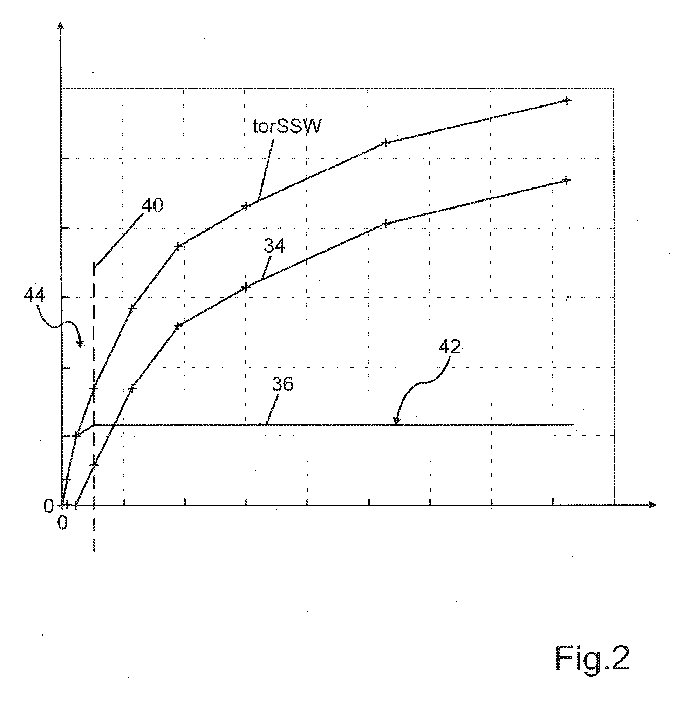

Die Funktionsweise des in dem Steuergerät 1 ablaufenden Verfahrens zur Bestimmung eines Soll-Lenkmoments torSSW (wobei hier - wie oben bereits erwähnt - ein Einfluss von weiteren Funktionen auf das Soll-Lenkmoment unberücksichtigt bleibt) wird anhand des in der Figur 2 gezeigten Diagramms dargestellt. Das Verfahren kann vorteilhafterweise in Form eines Computerprogramms realisiert werden, in welchem die für die Ermittlung der berechneten Zahnstangenkraft forRS erforderlichen Funktionalitäten in geeigneter Weise implementiert sind. Das Computerprogramm ist beispielsweise in dem Speichermedium 5 abgespeichert und wird auf dem Mikroprozessor 3 des Steuergeräts 1 ausgeführt.

Figur 2 zeigt beispielhaft die erfindungsgemäß mindestens heranzuziehenden Komponenten für die Bestimmung des Soll-Lenkmoments torSSW. Hierzu sind in Figur 2 ein Basismoment 34, ein Anteil 36 für ein Mittengefühl sowie das durch Addition des Basismoments 34 und des Anteils 36 bestimmte Soll-Lenkmoment torSSW aufgetragen. Das Basismoment 34 wird bezüglich der tatsächlichen Zahnstangenkraft forRT und der Anteil 36 wird bezüglich der berechneten Zahnstangenkraft forRS bestimmt, wobei die Ordinate des in Figur 2 dargestellten Diagramms der jeweils herangezogene Zahnstangenkraft entspricht. Die Kurven des Basismoments 34 und des Anteils 36 für das Mittengefühl beginnen in dem Ursprung des in Figur 2 gezeigten Diagramms. Figur 2 zeigt nur eine Lenkrichtung (beispielsweise nach links) die andere Lenkrichtung (nach rechts) ergibt sich durch eine Spiegelung der im Diagramm dargestellten Kurven an der Ordinate.

Gemäß dem in Figur 2 gezeigten Ausführungsbeispiel wird das Soll-Lenkmoment torSSW aus dem Basismoment 34 und aus dem Anteil 36 für das Mittengefühl durch Addition berechnet. Der Anteil 36 für das Mittengefühl wird vorliegend abhängig von einem Fahrzeugmodell ermittelt, welches den Radlenkwinkel 18 und die Fahrzeuggeschwindigkeit velV als Eingangsgrößen umfasst. Somit stellt das Basismoment 34 eine erste Komponente auf der Basis der tatsächlichen Zahnstangenkraft forRT und der Anteil 36 eine zusätzliche Komponente auf der Basis der berechneten Zahnstangenkraft forRS für die Bestimmung des Soll-Lenkmoments torSSW dar.

Bei dem in Figur 2 dargestellten Ausführungsbeispiel erfolgt bei kleinen Beträgen der tatsächlichen Zahnstangenkraft forRT keine Auswirkung auf das Basismoment 34. Das heißt, auf die Lenkvorrichtung 2 wirkende Kräfte infolge von Unvollkommenheiten des Fahrwerks, der Räder 14 oder der Fahrbahn sind für den Fahrer des Kraftfahrzeugs nicht über das Lenkmittel 10 wahrnehmbar. Dieser für den Fahrer nicht wahrnehmbare Bereich der Zahnstangenkraft forRT kann beispielsweise einen Bereich von -300 N bis +300 N (Newton) umfassen.

Der Anteil 36 wird dabei so bestimmt, dass das sich ergebende Soll-Lenkmoment torSSW schon bei sehr kleinen Zahnstangenkräften den aus der Figur 2 ersichtlichen steilen Anstieg in einer Umgebung des im Diagramm bezeichneten Nullpunkts aufweist. Wird die Zahnstangenkraft über einen Grenzbetrag 40 hinaus erhöht, welcher in der Zeichnung der Figur 2 durch eine senkrechte gestrichelte Linie dargestellt ist, so bleibt der Anteil 36 konstant und nimmt somit einen festen Wert 42 an. Der Grenzbetrag 40 charakterisiert auch einen Winkelbereich 44 für den Radlenkwinkel 18 und ebenso die Grenze der Gültigkeit eines dem Diagramm der Figur 2 zugrunde liegenden Zahnstangenkraftmodells. Gemäß einer Ausführungsform wird das Zahnstangenkraftmodell für eine Querbeschleunigung von bis zu $\pm 1,5 \frac{m}{s^2}$ als gültig erachtet.

Das in Figur 2 dargestellte Diagramm zeigt die dargestellten Größen für eine bestimmte Fahrzeuggeschwindigkeit velV. Dabei kann das Basismoment 34 nach vorbekannten Verfahren an geänderte Fahrgeschwindigkeiten angepasst werden. Ebenso ist der Anteil 36 für das Mittengefühl von der Fahrzeuggeschwindigkeit velV abhängig. Die im Diagramm dargestellten Kurven werden dazu in geeigneter Weise parametriert.

Durch eine geeignete Modellierung und/oder Wichtung des Basismoments 34 sowie des dazu addierten Anteils 36 für das Mittengefühl kann das sich ergebende Soll-Lenkmoment torSSW in passender Weise in Bezug auf die Zahnstangenkraft eingestellt werden. Damit wird ein Kompromiss hergestellt aus einer gewünschten Unempfindlichkeit gegenüber den beispielsweise durch das Fahrwerk, die Räder oder die Fahrbahn bedingten Unvollkommenheiten im Mittenbereich einerseits und einer der Realität entsprechenden Fahrbahn- und Fahrzeugrückmeldung im gesamten Fahrbereich, also auch im Grenzbereich, andererseits. Durch diesen Kompromiss wird ein verbessertes Mittengefühl bei gleichzeitig guter Rückmeldung außerhalb des Mittenbereichs erzielt.

**Patentansprüche**

1. Verfahren zur Bestimmung eines Soll-Lenkmoments (torSSW) für ein Lenkmittel (10) einer Lenkvorrichtung (2) in einem Fahrzeug, bei dem eine tatsächliche Zahnstangenkraft (forRT) ermittelt wird, und bei dem in Abhängigkeit der tatsächlichen Zahnstangenkraft (forRT) mindestens eine erste Komponente für das Soll-Lenkmoment (torSSW) bestimmt wird, **dadurch gekennzeichnet, dass** mindestens eine zusätzliche Komponente für das Soll-Lenkmoment (torSSW) bestimmt wird, wobei die zusätzliche Komponente aus einer berechneten Zahnstangenkraft (forRS) ermittelt wird, die berechnete Zahnstangenkraft (forRS) mindestens aus einem Radlenkwinkel (18) und einer Fahrzeuggeschwindigkeit (velV) ermittelt wird und wobei die zusätzliche Komponente nur in einem Mittenbereich der Lenkvorrichtung (2) einen veränderlichen Beitrag zu dem Soll-Lenkmoment (torSSW) liefert und darüber hinaus einen festen Wert (42) annimmt.

2. Verfahren nach Anspruch 1, **dadurch gekennzeichnet, dass** der Mittenbereich durch einen Winkelbereich (44) um die Geradeaus-Stellung der Lenkvorrichtung (2) und/oder durch einen Bereich einer Querbeschleunigung bestimmt wird.

3. Verfahren nach Anspruch 2, **dadurch gekennzeichnet, dass** der Bereich der Querbeschleunigung in etwa $-1,5\,\dfrac{m}{s^2}$ bis $+1,5\,\dfrac{m}{s^2}$ beträgt.

4. Verfahren nach wenigstens einem der vorstehenden Ansprüche, **dadurch gekennzeichnet, dass** die zusätzliche Komponente nur innerhalb eines Bereichs der berechneten Zahnstangenkraft (forRS) veränderlich ist und darüber hinaus einen festen Wert (42) annimmt.

5. Verfahren nach wenigstens einem der vorstehenden Ansprüche, **dadurch gekennzeichnet, dass** die berechnete Zahnstangenkraft (forRS) mittels eines Modells aus dem Radlenkwinkel (18) und der Fahrzeuggeschwindigkeit (velV) ermittelt wird.

6. Verfahren nach Anspruch 5, **dadurch gekennzeichnet, dass** das Modell bauartbedingte Größen des Fahrzeugs und/oder betriebsbedingte Größen des Fahrzeugs zusätzlich berücksichtigt.

7. Computerprogramm, das auf einer Steuer- und/oder Regeleinrichtung (1) einer Lenkvorrichtung (2) in einem Fahrzeug ablauffähig ist, **dadurch gekennzeichnet, dass** das Computerprogramm derart programmiert ist, dass ein Verfahren nach einem der Ansprüche 1 bis 6 ausgeführt wird, wenn das Computerprogramm auf der Steuer- und/oder Regeleinrichtung (1) des Fahrzeugs abläuft.

8. Speichermedium (5) für eine Steuer- und/oder Regeleinrichtung (1) einer Lenkvorrichtung (2) in einem Fahrzeug, **dadurch gekennzeichnet, dass** auf ihm ein Computerprogramm zur Anwendung in einem Verfahren nach einem der Ansprüche 1 bis 6 abgespeichert ist.

9. Lenkvorrichtung (2) in einem Fahrzeug, **dadurch gekennzeichnet, dass** sie Mittel zur Durchführung eines Verfahrens nach einem der Ansprüche 1 bis 6 umfasst.

**Claims**

1. Method for determining a setpoint steering torque (torSSW) for a steering means (10) of a steering device (2) in a vehicle, in which an actual toothed rack force (forRT) is determined, and in which at least a first component for the setpoint steering torque (torSSW) is determined as a function of the actual toothed rack force (forRT), **characterized in that** at least one additional component for the setpoint steering torque (torSSW) is determined, wherein the additional component is determined from a calculated toothed rack force (forRS) and the calculated toothed rack force (forRS) is determined at least from a steering wheel angle (18) and a vehicle velocity (velV), and wherein the additional component makes a variable contribution to the setpoint steering torque (torSS) only in a centre region of the steering device (2), and furthermore assumes a fixed value (42).

2. Method according to Claim 1, **characterized in that** the centre region is determined by an angular range (44) about the straight-ahead position of the steering device (2) and/or through a region of a lateral acceleration.

3. Method according to Claim 2, **characterized in that** the region of the lateral acceleration is approximately

$$-1.5\,\frac{m}{s^2}\ \text{ to }\ +1.5\,\frac{m}{s^2}\,.$$

4. Method according to at least one of the preceding claims, **characterized in that** the additional component is variable only within a range of the calculated toothed rack force (forRS), and furthermore assumes a fixed value (42).

5. Method according to at least one of the preceding claims, **characterized in that** the calculated toothed rack force (forRS) is determined by means of a model composed of the steering wheel angle (18) and the vehicle velocity (velV).

6. Method according to Claim 5, **characterized in that** the model additionally takes into account design-related variables of the vehicle and/or operating-related variables of the vehicle.

7. Computer program which can run in an open-loop and/or closed-loop control device (1) of a steering device (2) in a vehicle, **characterized in that** the computer program is programmed in such a way that a method according to one of Claims 1 to 6 is executed when the computer program runs on the open-loop and/or closed-loop control device (1) of the vehicle.

8. Storage medium (5) for an open-loop and/or closed-loop control device (1) of a steering device (2) in a vehicle, **characterized in that** a computer program for application in a method according to one of Claims 1 to 6 is stored in said storage medium (5).

9. Steering device (2) in a vehicle, **characterized in that** said steering device (2) comprises means for carrying out a method according to one of Claims 1 to 6.

**Revendications**

1. Procédé de détermination du couple de braquage de consigne (torSSW) d'un moyen de braquage (10) d'un dispositif de braquage (2) d'un véhicule, dans lequel une force effective (forRT) appliquée sur la crémaillère est déterminée et dans lequel au moins un premier composant du couple de braquage de consigne (torSSW) est déterminé en fonction de la force effective (forRT) appliquée sur la crémaillère, **caractérisé en ce que**
au moins un composant supplémentaire du couple de braquage de consigne (torSSW) est déterminé, **en ce que** le composant supplémentaire est déterminé à partir d'une force calculée (forRS) appliquée sur la crémaillère, **en ce que** la force calculée (forRS) appliquée sur la crémaillère est déterminée au moins à partir de l'angle (18) de braquage des roues et de la vitesse (velV) du véhicule et **en ce que** le composant supplémentaire ne délivre une contribution variable au couple de braquage de consigne (torSSW) que dans la partie centrale du dispositif de braquage (2) et prend ailleurs une valeur fixe (42).

2. Procédé selon la revendication 1, **caractérisé en ce que** la partie centrale est définie par une plage angulaire (44) qui entoure la position de déplacement en ligne droite du dispositif de braquage (2) et/ou par une partie d'une accélération transversale.

3. Procédé selon la revendication 2, **caractérisé en ce que** la partie de l'accélération transversale vaut sensiblement entrel - 1,5 m/s$^2$ à +1, 5 m/s$^2$.

4. Procédé selon au moins l'une des revendications précédentes, **caractérisé en ce que** le composant supplémentaire n'est variable que dans une partie de la force calculée (forRS) appliquée sur la crémaillère et prend ailleurs une valeur fixe (42).

5. Procédé selon au moins l'une des revendications précédentes, **caractérisé en ce que** la force calculée (forRS) appliquée sur la crémaillère est déterminée au moyen d'un modèle à partir de l'angle (18) de braquage des roues et de la vitesse (velV) du véhicule.

6. Procédé selon la revendication 5, **caractérisé en ce que** le modèle tient compte de grandeurs structurelles du véhicule et/ou de grandeurs fonctionnelles du véhicule, en supplément.

7. Programme informatique apte à être exécuté sur un dispositif de commande et/ou de régulation (1) d'un dispositif de braquage (2) d'un véhicule, **caractérisé en ce que** le programme informatique est programmé de manière à mettre en oeuvre un procédé selon l'une des revendications 1 à 6 lorsque le programme informatique est exécuté sur le dispositif de commande et/ou de régulation (1) du véhicule.

8. Support de mémoire (5) pour un dispositif de commande et/ou de régulation (1) d'un dispositif de braquage (2) d'un véhicule, **caractérisé en ce que**

un programme informatique destiné à être utilisé dans un procédé selon l'une des revendications 1 à 6 y est conservé en mémoire.

9. Dispositif de braquage (2) de véhicule **caractérisé en ce que**
il comporte des moyens permettant de mettre en oeuvre un procédé selon l'une des revendications 1 à 6.

Fig.1

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2930505